# EUROPÄISCHE PATENTSCHRIFT

(11) **EP 1 439 938 B1**
(45) Veröffentlichungstag und Bekanntmachung des Hinweises auf die Patenterteilung: **27.09.2006**
(21) Anmeldenummer: 02796171.3
(22) Anmeldetag: 22.08.2002
(51) Int. Cl.: B25G 3/00

(54) **HAUS- UND GARTENGERÄT**
HOUSEHOLD AND GARDENING DEVICE
APPAREIL MENAGER ET OUTIL DE JARDINAGE

(30) Priorität: 24.08.2001 DE 20114006 U
(43) Veröffentlichungstag der Anmeldung: 28.07.2004
(73) Patentinhaber: Wolf-Garten GmbH & Co. KG, 57518 Betzdorf (DE)
(72) Erfinder: HEUEL, Andreas, 57258 Freudenberg (DE); FINKLER, Peter, 66640 Namborn (DE)
(74) Vertreter: Koch, Günther
(86) Internationale Anmeldenummer: PCT/EP2002/009409
(87) Internationale Veröffentlichungsnummer: WO 2003/018271

(56) Entgegenhaltungen:
- EP-A- 0 057 916
- EP-A- 0 779 130
- US-A- 5 671 504

## Beschreibung

Die Erfindung bezieht sich auf Haus- und Gartenwerkzeuge, die als Handgeräte an einem Gerätestiel festlegbar sind, und insbesondere betrifft die Erfindung den geräteseitigen Kupplungsteil einer Stielbefestigungskupplung, wie dies beispielsweise in der EP-0 057 916 beschrieben ist. Diese Stielbefestigungskupplung weist im Stiel ein Geräteeinsatzloch auf, das das geräteseitige Stielende axial durchdringt und in das ein Geräteeinsteckzapfen einsteckbar ist, der dem Querschnitt des Geräteeinsatzloches zum formschlüssigen Aufnehmen angepaßt ist. Der Geräteeinsteckzapfen weist eine Verriegelungsausnehmung auf, in die ein Kupplungsorgan des Gerätestieles formschlüssig eingreift. Dieses kann beispielsweise als Kupplungsfeder ausgebildet sein. Der Geräteeinsteckzapfen trägt eine Anschlagtülle, an die die Stirnseite des gekuppelten Stiels anliegt.

Bei den bekannten Stielbefestigungskupplungen ist die Anschlagtülle aus zwei in einer Axialebene geteilten Halbschalen zusammengesetzt, die auf den Geräteeinsteckzapfen aufrastbar sind. Der Geräteeinsteckzapfen ist vorzugsweise als Flacheisen ausgebildet.

Der Erfindung liegt die Aufgabe zugrunde, den geräteseitigen Teil der Stielbefestigungskupplung derart zu verbessern, daß eine spielfreie Verbindung zwischen Gerät und Stiel auch nach längerer Gebrauchsdauer noch gewährleistet ist.

Gelöst wird die gestellte Aufgabe durch die Gesamtheit der im Anspruch 1 angegebenen Merkmale.

Dadurch, daß die radial geteilte Tülle spielfrei mit ihrem Durchgangsloch auf den Geräteeinsteckzapfen aufsetzbar ist, wird ein Verkippen der Tülle verhindert. Durch den Verriegelungszapfen wird erreicht, daß die Tülle in axialer Richtung spielfrei auf dem Geräteeinsteckzapfen festgelegt ist. Eventuell auftretende Herstellungstoleranzen können durch die Noppen auf der Stirnseite der Tülle ausgeglichen werden.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

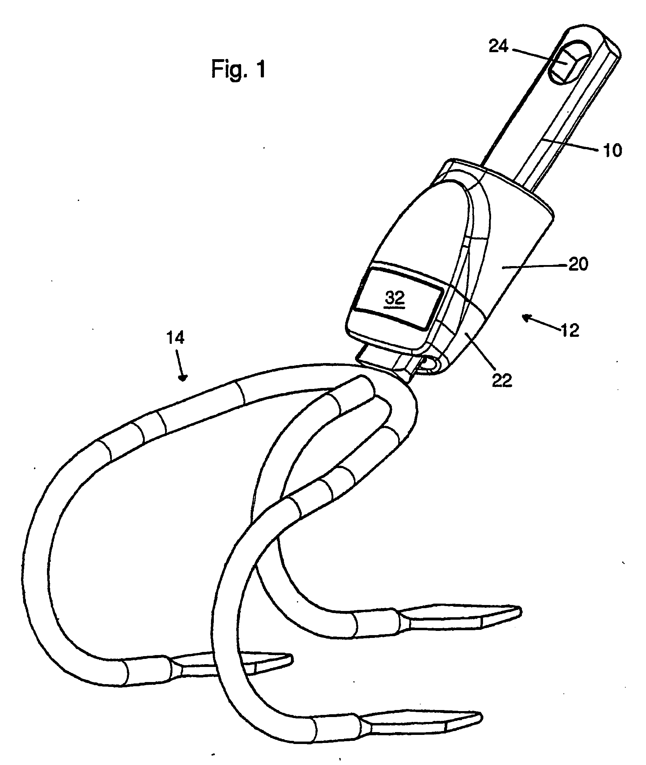

Fig. 1 ist eine perspektivische Darstellung eines als Grubber ausgebildeten Werkzeugs mit dem werkzeugseitigen Teil einer fertig montierten Stielbefestigungskupplung, deren Gegenstück an einem in der Zeichnung nicht dargestellten Stiel angeordnet ist;
Fig. 2 ist eine perspektivische Darstellung des Werkzeugs mit Stielbefestigungskupplung, deren Einzelteile der Übersichtlichkeit wegen auseinandergezogen dargestellt sind;

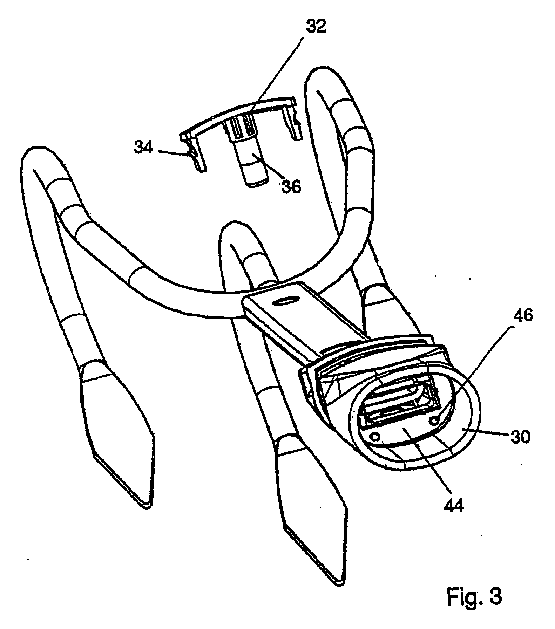

Fig. 3 ist eine perspektivische Darstellung des Werkzeugs mit den drei noch getrennten Teilen der Stielbefestigungskupplung.

In der Zeichnung ist nur der geräteseitige Teil einer Stielbefestigungskupplung dargestellt, deren Gegenstück in einem nicht dargestellten Stiel angeordnet ist, der mit unterschiedlichen Werkzeugen oder Geräten gekuppelt werden kann. Dieser geräteseitige Teil der Stielbefestigungskupplung weist einen Geräteeinsteckzapfen 10 auf, der gemäß dem bevorzugten Ausführungsbeispiel als Flacheisen ausgebildet ist und der in ein Geräteeinsatzloch am geräteseitigen Stielende des Stiels einschiebbar ist. Als Einschubbegrenzung für das Stielende ist eine Tülle 12 auf dem Geräteeinsteckzapfen 10 festgelegt, gegen deren stielseitiges Ende der Stiel zur Anlage kommt. An das hintere Ende des Geräteeinsteckzapfens 10 ist ein Werkzeug 14 festgelegt, das gemäß dem dargestellten Ausführungsbeispiel als Grubber ausgebildet ist, der drei Zinken 16 aufweist. Anstelle des Grubbers können an dem Geräteeinsteckzapfen andere Gartengeräte wie Rechen, Krümmer, Schuffel, Hacken, Bügeljäter, Distelstecher, Fächerbesen und viele weitere Geräte angeschlossen sein. Die Verbindung mit dem Gerätezapfen 10 erfolgt gemäß dem dargestellten Ausführungsbeispiel über Schweißnähte 18.

Die Tülle 12 besteht aus zwei hülsenartigen Teilen, nämlich einer Manschette 20 und einem Kopfteil 22, die beide mit Durchgangslöchern ausgestattet sind, deren Querschnittsform exakt der Querschnittsform des Geräteeinsteckzapfens 10 entspricht, so daß beide Teile spielfrei auf dem Geräteeinsteckzapfen 10 aufgeschoben werden können.

Der Geräteeinsteckzapfen 10 weist an seinem stielseitigen Ende eine Verriegelungsausnehmung 24 auf, in die ein Kupplungsorgan des stielseitigen Kupplungsteils formschlüssig eingreifen kann, wenn der Geräteeinsteckzapfen 10 in das Geräteeinsatzloch am Stielende eingeschoben ist. Das Ende des Geräteeinsteckzapfens weist abgerundete Steuerflächen auf, wobei die Radien 26 von Steuerfläche und stielseitigem Lochende gleich sind.

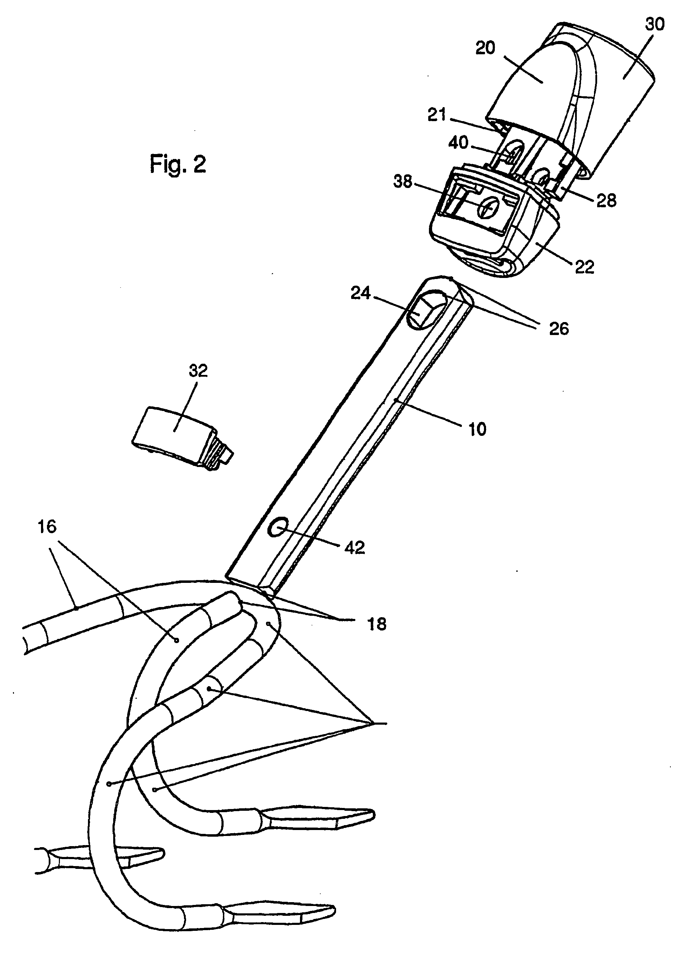

Wie insbesondere aus Fig. 2 erkennbar, weist die Manschette 20 zwei gabelartige Laschen 21 auf, die beidseitig des Zapfeneinsatzloches zu liegen kommen und in entsprechende Ausnehmungen des Kopfteils 22 einschiebbar sind. Rastmittel 28 in Gestalt von Federzungen mit Verriegelungsrasten halten im zusammengesteckten Zustand Manschette 20 und Kopfteil 22 zusammen. Die Manschette 20 ist mit einem Kragen 30 versehen, der im gekuppelten Zustand das Stielende umschließt. Der Kopfteil 22 ist mit einer Ausnehmung versehen, in die eine Blende 32 einpaßt, die mit Rasthaken 34 an der Manschette festgelegt werden kann.

Im Bereich dieser Ausnehmung für die Blende 32 weist der Kopfteil 22 ein Loch 38 auf, das im zusammengesteckten Zustand mit Löchern 40 der Laschen 21 der Manschette 20 fluchtet. Die derart vormontierte Tülle wird auf den Geräteeinsteckzapfen 10 aufgeschoben, bis die Löcher 38, 40 mit einem Riegelloch 42 des Geräteeinsteckzapfens 10 fluchten. Dann wird die Blende 32 eingesetzt, die einen Riegelzapfen 36 aufweist, der durch die Löcher 38, 40 und 42 gesteckt wird und dadurch die Tülle 12 spielfrei auf dem Geräteeinsteckzapfen 10 festlegt.

Auf der Stirnseite 44 der Manschette 20, die innerhalb des Kragens 30 liegt und gegen die das stimseitige Ende des Stiels zur Anlage kommt, sind vier Noppen 46 zum Ausgleich axialer Toleranzen angeordnet, die begrenzt deformierbar sind und dadurch das Gerät spielfrei am Stiel festlegen.

### Bezugszeichenliste

- 10: Geräteeinsteckzapfen
- 12: Tülle
- 14: Werkzeug (Grubber)
- 16: Zinken
- 18: Schweißnaht
- 20: Manschette
- 21: Laschen
- 22: Kopfteil
- 24: Verriegelungsausnehmung
- 26: Radien
- 28: Rastmittel
- 30: Kragen
- 32: Blende
- 34: Rasthaken
- 36: Riegelzapfen
- 38: Loch in 22
- 40: Loch in 20
- 42: Riegelloch
- 44: Stirnfläche
- 46: Noppen

## Patentansprüche

1. Haus- und Gartenwerkzeug (14) mit einem stielseitigen Kupplungsteil und mit einem das Werkzeug (14) tragenden Geräteeinsteckzapfen (10), der eine Anschlagtülle (12) zum Anschlag an einem Stielende aufweist, mit den folgenden Merkmalen:
- die Tülle (12) besteht aus zwei hülsenartigen miteinander verrastbaren Teilen, nämlich einem Kopfteil (22) und einer Manschette (20);
- der eine Tüllenteil (20) steht mit Laschen (21) in den anderen Tüllenteil (22) ein;
- beide Tüllenteile (20, 22) weisen ein Steckzapfenloch auf, mit dem sie spielfrei auf dem Geräteeinsteckzapfen (10) aufgesetzt sind;
**dadurch gekennzeichnet, dass**
- beide Tüllenteile (20, 22) deckungsgleiche Löcher (38, 40) aufweisen, die auf ein Riegelloch (42) des Geräteeinsteckzapfens (10) ausrichtbar sind und
- ein Riegelzapfen (36) in die fluchtenden Löcher (38, 40, 42) eingesteckt ist.

2. Haus- und Gartenwerkzeug nach Anspruch 1,
**dadurch gekennzeichnet, dass** der Riegelzapfen (36) an einer Blende (32) festgelegt ist, die im eingesteckten Zustand mit der Oberfläche des Kopfteils (22) fluchtet und mit dieser über Rasthaken (34) verrastbar ist.

3. Haus- und Gartenwerkzeug nach Anspruch 1,
**dadurch gekennzeichnet, dass** die hülsenartige Manschette (20) mit zwei dem Geräteeinsteckzapfen (10) anliegenden Laschen (21) versehen ist, die Durchgangslöcher (40) tragen, welche im eingesteckten Zustand des Kopfteils (22) mit den Durchgangslöchern (38) und dem Riegelloch (42) fluchten.

4. Haus- und Gartenwerkzeug nach einem der Ansprüche 1 bis 3,
**dadurch gekennzeichnet, dass** das stielseitige Ende der Manschette (20) mit einem das Stielende umschließenden Kragen (30) versehen ist.

## Claims

1. A domestic and garden implement (14) comprising a coupling part at the handle side and a device insertion projection (10) which carries the implement (14) and which has an abutment socket (12) for abutment against an end of the handle, comprising the following features:
- the socket (12) comprises two portions which are latchable sleeve-like to each other, namely a head portion (22) and a cuff (20);
- the one socket portion (20) engages with tongues (21) into the other socket portion (22);
- both socket portions (20, 22) have a plug projection hole with which they are fitted without play on the device insertion projection (10);
**characterised in that**
- both socket portions (20, 22) have congruent holes (38, 40) which can be aligned with a locking hole (42) in the device insertion projection (10), and
- a locking projection (36) is fitted into the aligned holes (38, 40, 42).

2. A domestic and garden implement according to claim 1 **characterised in that** the locking projection (36) is fixed to a cover (32) which in the inserted condition is aligned with the surface of the head portion (22) and is latchable thereto by way of latching hooks (34).

3. A domestic and garden implement according to claim 1 **characterised in that** the sleeve-like cuff (20) is provided with two tongues (21) which bear against the device insertion projection (10) and which carry through holes (40) which in the inserted condition of the head portion (22) are aligned with the through holes (38) and the locking hole (42).

4. A domestic and garden implement according to one of claims 1 to 3 **characterised in that** the handle end of the cuff (20) is provided with a collar (30) which surrounds the end of the handle.

## Revendications

1. Outil domestique et de jardinage (14) comprenant un élément d'accouplement situé côté manche et une queue (10) portant l'outil (14) qui est dotée d'un embout de butée (12) destiné à venir en butée contre une extrémité du manche, qui présente les caractéristiques suivantes :
- l'embout (12) est composé de deux parties semblables à des douilles pouvant s'enclencher l'une dans l'autre, à savoir une partie supérieure (22) et un manchon (20);
- l'une des parties d'embout (20) est emboîtée à l'aide de languettes (21) dans l'autre partie d'embout (22);
- les deux parties d'embout (20, 22) présentent un trou recevant un tenon, à l'aide duquel elles sont mises en place sans jeu sur la queue (10) de l'outil ;
**caractérisé en ce que**
- les deux parties d'embout (20, 22) présentent des trous (38, 40) coïncidant l'un avec l'autre qui peuvent être positionnés sur un trou de verrouillage (42) de la queue (10) de l'outil et
- un tenon de verrouillage (36) est enfoncé dans les trous (38, 40, 42) qui sont alignés les uns sur les autres.

2. Outil domestique et de jardinage selon la revendication 1, **caractérisé en ce que** le tenon de verrouillage (36) est fixé à un capot (32) qui, lorsqu'il est en place, est en affleurement avec la surface de la partie supérieure (22) et être en prise avec cette dernière au moyen de griffes d'enclenchement (34).

3. Outil domestique et de jardinage selon la revendication 1, **caractérisé en ce que** le manchon (20) semblable à une douille est doté de deux languettes (21) appliquées contre la queue (10) de l'outil, qui portent des trous de passage (40) qui, lorsque la partie supérieure (22) est emboîtée, est en alignement avec les trous de passage (3 8) et le trou de verrouillage (42).

4. Outil domestique et de jardinage selon l'une des revendications 1 à 3, **caractérisé en ce que** l'extrémité du manchon (20) située côté manche est munie d'un col (30) entourant l'extrémité du manche.
